# EUROPÄISCHE PATENTANMELDUNG

(11) **EP 2 990 679 A1**
(43) Veröffentlichungstag der Anmeldung: **02.03.2016**
(21) Anmeldenummer: 14182716.2
(22) Anmeldetag: 28.08.2014
(51) Int. Cl.: F16D 13/64, F16D 69/00, F16D 65/12, F16D 65/02

(54) **Verfahren zur Herstellung einer Lamelle für eine Bremse beziehungsweise Kupplung sowie Lamelle**

(71) Anmelder: Ortlinghaus-Werke GmbH, 42929 Wermelskirchen (DE)
(72) Erfinder: Krenkel, Walter, Prof. Dr., 95445 Bayreuth (DE); Langhof, Nico, Dr., 95445 Bayreuth (DE); Langenbeck, Bernhard, Dr.-Ing., 44267 Dortmund (DE); Seeger, Herbert, Dip.-Ing., 32547 Bad Oeynhausen (DE); Sorhage, Jörg, Dipl.-Ing., 32547 Bad Oeynhausen (DE)
(74) Vertreter: Stenger Watzke Ring

(57) **Zusammenfassung**

Die Erfindung betrifft ein Verfahren zur Herstellung einer Lamelle (1, 16) für eine Bremse bzw. Kupplung, wobei zunächst ein Reibkörper (2, 11, 12, 13, 14) aus einem Fasermaterial endkonturnah gebildet wird, und wobei der Reibkörper (2, 11, 12, 13, 14) anschließend mit einem als Mitnehmer dienenden Grundkörper (3, 17) verbunden wird. Zudem betrifft die Erfindung eine Lamelle für Bremsen bzw. Kupplungen, mit einem Grundkörper (3, 17) und einem mit dem Grundkörper (3, 17) verbundenen Reibkörper (2, 11, 12, 13, 14), wobei der Reibkörper (2, 11, 12, 13, 14) aus einem endkonturnah gefertigten Fasermaterial gebildet ist.

## Beschreibung

Die Erfindung betrifft ein Verfahren zur Herstellung einer Lamelle für eine Bremse beziehungsweise Kupplung sowie eine Lamelle für Bremsen beziehungsweise Kupplungen.

Derartige Lamellen und Verfahren zu deren Herstellung sind an sich bekannt. Es handelt sich hierbei um üblicherweise in Paketen abwechselnd angeordnete Außen- und Innenlamellen, welche auf den sie jeweils tragenden Achsen axial beweglich angeordnet sind. Sofern die Bremse oder Kupplung geschlossen werden soll, werden die Lamellen des Lamellenpakets axial zusammengepresst. Durch den Kontakt der Lamellen miteinander bildet sich eine Reibkraft aus, welche die Drehgeschwindigkeiten des die Außenlamellen tragenden Teils und des die Innenlamellen tragenden Teils angleicht. Das gleiche Prinzip wird auch bei einer Bremse angewendet, wobei hier üblicherweise entweder das Außenteil oder das Innenteil stationär ist, so dass beim Schließen der Bremse das sich bewegende Teil bis zum Stillstand abgebremst wird. Durch ein entsprechendes Lüften der Kupplung beziehungsweise Bremse werden die Lamellen des Lamellenpaket außer Eingriff gebracht, so dass Relativbewegungen zwischen dem Außenteil und dem Innenteil ohne hindernde Reibkraft möglich sind.

Es sind verschiedene Materialien und Herstellungsverfahren für die Lamelle und einen gegebenenfalls auf einem Grundkörper der Lamelle angebrachten Reibbelag bekannt. Die DE 43 22 231 A1 betrifft beispielsweise eine Reiblamelle für eine Kupplung oder Bremse, welche über ein Trägermaterial einerseits und eine Reibschicht andererseits verfügt. Das Trägermaterial kann aus einem Blech oder einer Gewebeschicht aus geflochtenen Fasern gebildet sein. Die Reibschichten können aus in Harz und Füllmaterial eingelagerten Kohlefasern bestehen. Kennzeichnend für die bekannte Reiblamelle ist jedoch, dass sowohl die Reibschichten als auch das Trägermaterial aus großflächigen Matten eines Rohmaterials ausgeschnitten und übereinander gelegt werden.

Wenngleich sich die bekannte Reiblamelle bewährt hat, besteht dennoch Verbesserungsbedarf. Das beschriebene Ausschneiden der Reibschichten und des Trägermaterials aus großflächigen Matten eines Rohmaterials führt dazu, dass eine erhebliche Menge an verschnittenem Material anfällt. Insbesondere der Verschnitt bei Kohlefasermatten kann nicht sinnvoll weiterverwendet werden und ist somit Abfall. Dies führt vor dem Hintergrund, dass derartige Kohlefasermatten vergleichsweise teuer in der Herstellung sind, dazu, dass sich die bekannten Reiblamellen mit Kohlefasermaterialien nicht wirtschaftlich sinnvoll herstellen lassen.

Es ist daher die **Aufgabe** der vorliegenden Erfindung, eine gattungsgemäße Lamelle und ein gattungsgemäßes Verfahren vorzuschlagen, welches eine wirtschaftlich sinnvolle Herstellung erlaubt, das heißt insbesondere die Herstellkosten gegenüber dem Stand der Technik verringert, bevorzugterweise bei aus Kohlefasermaterialien gebildeten Reiblamellen.

Zur **Lösung** schlägt die Erfindung verfahrensseitig vor, dass zunächst ein Reibkörper aus einem Fasermaterial endkonturnah gebildet wird, und wobei der Reibkörper anschließend mit einem als Mitnehmer dienenden Grundkörper verbunden wird.

Erfindungsgemäß wird der Reibkörper, insbesondere ein anschließend noch auszuhärtender Reibkörperrohling, aus einem Fasermaterial gebildet. Hierbei kann es sich um ein faserverstärktes organisches Material, ein faserverstärktes C/C-SiC-Material, einen kohlefaserverstärkten Kunststoff und/oder dergleichen handeln. Es kann sich um ein Fasergewebe und/oder Fasergelege handeln. Ein Fasergewebe ist ein insbesondere textiles Flächengebilde aus einzelnen, einander kreuzenden Fasern. Ein Fasergelege ist ein Flächengebilde, das aus einer oder mehreren Lagen von insbesondere parallel verlaufenden Fasern besteht. Ein Fasergelege im Sinne der Erfindung kann auch aus einer Vielzahl von aufeinander angeordneten Faserschichten, beispielsweise Fasergewebeschichten, gebildet sein.

Sofern im Folgenden von einem Reibkörper die Rede ist, umfasst dies sowohl den endfertig ausgehärteten Reibkörperrohling aus dem Fasermaterial, als auch das den noch nicht ausgehärteten Reibkörperrohling.

Im Unterschied zum Stand der Technik werden jedoch nicht großflächige Matten aus dem Fasermaterial gebildet und daraus einzelne Reibkörper ausgeschnitten, sondern der Reibkörper wird vielmehr hinsichtlich des benötigten Fasermaterials unmittelbar endkonturnah hergestellt. Endkonturnah meint, dass der Reibkörper unmittelbar in seiner endfertigen Form hergestellt wird. Der Reibkörper wird sozusagen urgeformt. Durch die Erzeugung bzw. Entstehung des Fasermaterials wird der Reibkörper selbst bereits endkonturnah erzeugt. Hiervon sind aber auch Herstellverfahren umfasst, bei denen noch eine geringe abschließende Fertigbearbeitung des Fasermaterials erforderlich ist, beispielsweise ein Abschneiden von Graten, abstehenden Fasern und dergleichen. Es wird also nicht wie im Stand der Technik in einem Zwischenschritt eine Matte oder dergleichen hergestellt, aus welcher dann einzelne Reibkörper bzw. Reibkörperrohlinge ausgestanzt werden. Der Reibkörper, insbesondere der Reibkörperrohling, kann gemäß der Erfindung nahezu oder vollständig verschnittfrei hergestellt werden.

Der Reibkörper kann dem Grunde nach eine beliebige Form haben. Besonders geeignet für Lamellen sind ringförmige Reibkörper. Eine Möglichkeit zur Herstellung eines erfindungsgemäßen Reibkörpers ist das Weben, insbesondere Spiralweben. Beim Spiralweben ist vorgesehen, dass nicht eine großflächige Matte aus dem Fasermaterial gewebt wird, sondern vielmehr eine Art sich im Wesentlichen endlos erstreckenden Bands, welches eine vorgegebene Krümmung aufweist. Auf diese Weise kann das so hergestellte Fasergelege schraubenförmig aufeinander abgelegt werden. Das heißt bei der Herstellung von Spiralgeweben bzw. Spiralgelegen wird ein vergleichsweise dünnes Fasermaterialband nach und nach im Kreis aufeinander abgelegt, so dass sich im Ergebnis ein ringförmiges Fasermaterial, insbesondere Fasergelege ergibt. Die Dicke des Fasergeleges kann je durch die Anzahl der aufeinander abzulegenden Windungen beliebig gewählt werden. Der Radius des ringförmigen Fasergeleges kann durch die entsprechende Krümmung bei der Herstellung des Fasergeleges gewählt werden. Die Breite des ringförmigen Fasergeleges kann durch die Breite des herzustellenden Fasermaterial-Bands gewählt werden.

Aus dem hergestellten Fasermaterial - dem Reibkörperrohling - wird der Reibkörper unter Beigabe eines Harzwerkstoffes, beispielsweise Kunstharz, durch Aushärten gebildet. Dies erfolgt ebenfalls endkonturnah und insbesondere verschnittfrei. Das ringförmige Fasermaterial kann einen konstanten Innendurchmesser und/oder einen konstanten Außendurchmesser aufweisen. Ein so hergestellter Reibkörper kann dann beispielsweise durch Verkleben und/oder Verpressen mit dem Grundkörper verbunden werden. Eine Besonderheit liegt darin, dass durch das erfindungsgemäße Verfahren, beispielsweise bei Anwendung des Spiralwebens, das bandförmige Fasermaterial einen insbesondere regelmäßig wellenförmigen Verlauf aufweisen kann. Dadurch ist es möglich, dass das ringförmige Fasermaterial beispielsweise eine zykloide, insbesondere sinoide Innenkontur und/oder Außenkontur aufweist. In eine derart gewellte Innenkontur des Reibkörpers können entsprechende Nocken und/oder sonstige Konturen des den Reibkörper tragenden Grundkörpers eingreifen, so dass erfindungsgemäß eine besonders tragfähige formschlüssige Verbindung zwischen dem Grundkörper und dem Reibkörper geschaffen werden kann. Dieser Formschluss kommt insbesondere in Umlaufrichtung der Lamelle zustande. Durch das Spiralweben lässt sich ein zuvor beschriebener Reibkörper bereits endfertig beim Weben des Fasermaterials selbst herstellen. Im Stand der Technik war es hingegen jedenfalls noch erforderlich, eine entsprechende Innen- und/oder Außenkontur in den Reibkörper einzubringen, beispielsweise durch Schneiden einer Mitnahmekontur und/oder dergleichen.

Das Aushärten kann je nach verwendetem Harzwerkstoff und Fasermaterial beispielsweise bei einer Temperatur von 200°C bis 350°C erfolgen. Dem Harzwerkstoff bzw. Fasermaterial können Zusatzstoffe beigemengt werden. Hierbei kann es sich um keramische Zusatzstoffe wie beispielsweise C/C-SiC handeln. Diese Zusatzstoffe werden auch als Matrixstoffe bezeichnet. Durch das Aushärten bei der zuvor genannten Temperatur wird ein sogenannter Grünling gebildet. Dieser kann anschließend gebrannt werden, beispielsweise bei einer Temperatur von 1700°C bis 2000°C. Das Brennen kann in einem Ofen durchgeführt werden. Durch das Brennen silizieren die Reibkörper, insbesondere die beigemengten beispielsweise keramischen Zusatzstoffe. Anschließend kann noch vorgesehen sein, dass die Reibflächen des Reibkörpers "aufgeschlossen" bzw. "geöffnet" werden, beispielsweise durch Schleifen. Dadurch kann der Reibwert der Reibflächen auf den gewünschten Wert eingestellt werden.

Durch das erfindungsgemäße Verfahren werden gleich mehrere Vorteile realisiert. Zum einen fällt kein nennenswerter Abfall an überschüssigem Fasermaterial an. Dies verringert zum einen die Kosten der herzustellenden Lamellen und sorgt zum anderen auch für eine besonders gute Umweltverträglichkeit des Herstellverfahrens, da eine Entsorgung von Abfällen nicht erforderlich wird. Zusätzlich kann durch das erfindungsgemäße Verfahren Zeit und Aufwand beziehungsweise weitere Bearbeitungsmaschinen und -schritte eingespart werden. Die aus dem Fasermaterial gebildeten Reibkörper müssen nämlich nicht noch mit Nuten zur Festlegung am Grundkörper und/oder dergleichen versehen werden. Sie können vielmehr unmittelbar mit dem Grundkörper verbunden und anschließend verwendet werden.

Ein weiterer Vorteil ist, dass auf die bislang bekannte Materialpaarung Stahl/Stahl zwischen Grundkörper und Nabe bzw. Gehäuse verzichtet werden kann. Durch Systemschwingungen besteht hierbei eine relativ hohe Gefahr von Reibkorrosion in der Verbindung und damit Verschleißgefahr. Durch den erfindungsgemäßen Einsatz von Composite-Materialien kann die Stahl/Stahl-Paarung in der Mitnahmeverzahnung aufgelöst werden. Durch einen keramischen Reibbelag mit seiner hohen Temperaturfestigkeit kann zudem je nach Anwendungsfall ein durch Leerlaufreibung ineffizientes Nasslaufsystem ersetzt werden.

Gemäß einer vorteilhaften Weiterbildung der Erfindung wird der Grundkörper durch Pressen und/oder Spritzgießen an den Reibkörper angeformt. Der Reibkörper wird hierzu in eine Form eingelegt. Anschließend wird ein Grundkörper unter zumindest teilweiser Aufnahme des Reibkörpers hergestellt. Der Grundkörper kann aus faserverstärktem Duro- und/oder Thermoplast gebildet sein. Derartige Materialien lassen sich beispielsweise durch Sintern, Spritzgießen, Pressen und/oder dergleichen verarbeiten. Ein Duroplast kann besonders gut in einer Presse verarbeitet werden. Das Ausgangsmaterial für den Grundkörper kann beispielsweise pulverförmig oder flüssig vorliegen. Der Grundkörper kann also insbesondere durch Urformen und/oder Umformen gebildet und dadurch gleichzeitig mit dem Reibkörper verbunden werden. Dies umfasst beispielsweise das Ausbilden einer Außenkontur am Grundkörper, welche zur Innenkontur des Reibkörpers korrespondiert. Das heißt, der Grundkörper erhält beispielsweise eine wellenförmige, insbesondere zykloide, bevorzugt sinoide Außenkontur. Dadurch kann ein guter Verbund zwischen Grundkörper einerseits und dem Reibkörper andererseits geschaffen werden, welcher sicherstellt, dass der Reibkörper in Umfangsrichtung vom Grundkörper sicher mitgenommen wird. Durch das Anformen des Grundkörpers an den Reibkörper wird ein einstückiger, monolithischer Verbund geschaffen.

Die Herstellung des Grundkörpers und das Verbinden des Grundkörpers mit dem Reibkörper können im gleichen Verfahrensschritt, insbesondere gleichzeitig, durchgeführt werden.

Gemäß einer vorteilhaften Weiterbildung der Erfindung werden mit denselben Werkzeugen zum Pressen und/oder Spritzgießen Lamellen mit Reibkörpern aus unterschiedlichen Fasermaterialien gebildet. Die Erfindung schlägt eine Art Baukastensystem vor. Je nach Anwendungsfall können Lamellen mit hinsichtlich der Reibeigenschaften unterschiedlich ausgebildeten Reibkörpern gebildet werden. Allerdings ist allen nach diesem Baukastensystem möglichen Reibkörpern gemein, dass sie endkonturnah und verschnittfrei durch Spiralweben eines ringförmigen Fasermaterials gebildet werden. Es kann erfindungsgemäß ein und dasselbe Werkzeug zur Herstellung der Reibkörper verwendet werden. Außerdem können diese Werkzeuge zum Pressen und/oder zum Spritzgießen verwendet werden, unabhängig vom Reibkörpertyp. Dadurch lassen sich Lamellen mit unterschiedlichen Reibeigenschaften besonders wirtschaftlich herstellen, da für unterschiedlichste Lamellen dieselben Werkzeuge verwendet werden können. Nun werden der Reibkörper und der Grundkörper durch Kleben miteinander verbunden. Beispielsweise kann auf beiden Seiten des Grundkörpers jeweils ein Reibkörper aufgeklebt werden. Die geklebten Reibkörper können einen Wechsel der Reibkörper erleichtern. Es kann beispielsweise ein Kleber verwendet werden, welcher durch entsprechende Aktivierung beziehungsweise Deaktivierung einfach wieder gelöst werden kann. Abgenutzte Reibkörper beziehungsweise -Beläge können so einfach ausgewechselt werden.

Gemäß einer vorteilhaften Weiterbildung der Erfindung wird der Reibkörper als geschlossener Ring mit einem Radius R gebildet und anschließend in eine Anzahl von N - Ringsegmenten unterteilt, wobei entweder höchstens N-1 Ringsegmente einzeln und voneinander beabstandet oder N Ringsegmente auf einem Radius größer R mit dem Grundkörper verbunden werden. Die Verwendung solcher einzelner und voneinander beabstandeter Ringsegmente macht beispielsweise dann Sinn, wenn die Reibkörper auf den Grundkörper aufgeklebt werden. Die einzelnen Ringsegmente können kann über den Umfang des Grundkörpers verteilt auf ihm angeordnet werden. Durch diese Weiterbildung der Erfindung können Spannungen aufgrund unterschiedlicher Temperaturausdehnung von Reibkörper einerseits und Grundkörper andererseits deutlich verringert werden. Die Verwendung von N-1 Ringsegmenten macht insbesondere dann Sinn, wenn die Ringsegmente auf einem Radius kleiner gleich R auf den Grundkörper geklebt werden. Dadurch werden Zwischenräume zwischen den einzelnen Ringsegmenten sichergestellt.

Gemäß einer vorteilhaften Weiterbildung der Erfindung werden Reibkörper und Grundkörper getrennt voneinander hergestellt. Reibkörper und Grundkörper können völlig unabhängig voneinander hergestellt werden, beispielsweise an voneinander entfernten Orten und/oder dergleichen. Dies betrifft insbesondere die Variante, bei der die Reibkörper auf den fertig hergestellten Grundkörper aufgeklebt werden. Der Grundkörper kann bei dieser Variante aus Metall, insbesondere Aluminium-Druckguss hergestellt werden. Die Herstellung erfindungsgemäßer Lamellen kann so besonders flexibel den jeweiligen Gegebenheiten angepasst werden.

Vorrichtungsseitig schlägt die Erfindung zur Lösung vor eine Lamelle für Bremsen beziehungsweise Kupplungen, mit einem Grundkörper und einem mit dem Grundkörper verbundenen Reibkörper, wobei der Reibkörper aus einem endkonturnah gefertigten Fasermaterial gebildet ist.

Der Reibkörper ist also aus einem Fasermaterial gebildet. Im Unterschied zum Stand der Technik wird er jedoch nicht aus beispielsweise einer großflächigen Matte ausgeschnitten, sondern vielmehr endkonturnah und insbesondere verschnittfrei hergestellt. Die endkonturnahe Fertigung kann, wie zuvor bereits ausgeführt, durch Spiralweben realisiert werden. Die Eigenschaft, endkonturnah gefertigt zu sein, lässt sich am endfertig hergestellten Reibkörper ohne weiteres erkennen. Der Reibkörper weist nämlich nicht die durch das Ausschneiden aus Fasermatten bekannten insbesondere umlaufenden Schnittflächen auf. Der Reibkörper beziehungsweise das Fasermaterial ist vielmehr dadurch gekennzeichnet, dass er an den Rändern im Wesentlichen aus ungeschnittenen Fasern gebildet ist. Dies schließt auch im Verhältnis zum gesamten Rand kleinere Bearbeitungen, insbesondere Schnittflächen, mit ein. Das Fasermaterial kann vollständig aus Endlosfasern gebildet sein. Die Technik der endkonturnahen Fertigung, insbesondere des Spiralwebens und die damit verbundenen Vorteile gelten hinsichtlich der Vorrichtung wie zuvor bezüglich des Verfahrens bereits beschrieben. Der Reibkörper kann aus dem beschriebenen Fasermaterial und einem Harzwerkstoff, insbesondere Kunstharz, gebildet sein. Der Reibkörper kann ringförmig ausgebildet sein.

Gemäß einer vorteilhaften Weiterbildung der Erfindung ist der Reibkörper aus einem faserverstärkten organischen Material, einem faserverstärkten C/C-SiC-Material oder einem kohlefaserverstärkten Kunststoff gebildet. Alle diese Materialien liegen in Faserform vor und sind zu einem Fasergelege miteinander verwebt. Ein kohlefaserverstärkter Kunststoff eignet sich besonders gut für nasslaufende Lamellen. Ein faserverstärktes organisches Material beziehungsweise ein faserverstärktes C/C-SiC-Material eignet sich besonders gut für trockenlaufende Lamellen.

Gemäß einer vorteilhaften Weiterbildung der Erfindung ist der Grundkörper aus faserverstärktem Duro- und/oder Thermoplast oder Metall, insbesondere Aluminium-Druckguss, gebildet. Es kann sich hierbei also um ein Composit-Bauteil handeln.

Gemäß einer vorteilhaften Weiterbildung der Erfindung ist der Reibkörper in einer radial umlaufenden Nut des Grundkörpers angeordnet. Dies bedeutet mit anderen Worten, dass der Grundkörper den Reibkörper in axialer Richtung von beiden Seiten aufnimmt. Sofern der Grundkörper an den Reibkörper angeformt wird, bildet der Reibkörper während des Formgebungsprozesses ein Formelement.

Gemäß einer vorteilhaften Weiterbildung der Erfindung ist der Reibkörper in Reibsegmente unterteilt, welches Reibsegmente auf den Grundkörper aufgeklebt sind. Die Reibsegmente können voneinander beabstandet auf den Grundkörper aufgeklebt sein, was zu einer Verringerung von Materialspannung infolge von Temperaturänderungen auftreten kann.

Gemäß einer vorteilhaften Weiterbildung der Erfindung weist der Grundkörper eine innere Mitnahmeverzahnung auf. Hierbei kann es sich um eine Passfeder-Verbindung, eine umlaufende Verzahnung und/oder dergleichen handeln. Der Grundkörper kann Lüftungslöcher aufweisen. Diese können unmittelbar bei der Herstellung des Grundkörpers beziehungsweise der gesamten Lamelle ausgebildet werden, beispielsweise durch eine entsprechende Spritzgussform. Die Durchlüftungslöcher dienen einer besseren Wärmeabfuhr, was die Leistungsfähigkeit und/oder Lebensdauer der Lamelle erhöht.

Gemäß einer vorteilhaften Weiterbildung der Erfindung weist die Lamelle eine Materialdichte von ungefähr 1,5 bis 2,2 g/cm³ auf. Diese geringe Materialdichte kann sich ergeben, wenn die vorstehend beschriebenen Materialien zum Einsatz kommen. Somit kann eine erfindungsgemäße Lamelle eine vergleichsweise geringe Materialdichte aufweisen, was zu entsprechend niedrigen Massenträgheitsmomenten derartiger Lamellen führt. Ein weiterer Vorteil der zum Einsatz kommenden Komposit-Werkstoffe ist die Eigenschaft, von Haus aus dämpfend zu sein. Dies wirkt positiv auf Eigenschaften wie Reibschwingungen, Schaltgeräusche und/oder dergleichen. Außerdem sind die zuvor beschriebenen Werkstoffe für den Reibkörper besonders gut geeignet, da sie eine hohe Toleranzschwelle bezüglich Einflüssen auf die Tribologie durch Betriebsparameter wie Gleitgeschwindigkeit, Temperatur und/oder (bei Nasslauf) die eingesetzten Öle haben.

Die Fasermaterialien für die Reibkörper können als Halbzeuge hergestellt werden. Die anschließende Fertigstellung der Lamelle durch Fertigbearbeitung der Reibkörper und Herstellung des Grundkörpers kann in einem gemeinsamen, insbesondere gleichzeitigen, Fertigungsschritt erfolgen.

Gemäß einer vorteilhaften Weiterbildung der Erfindung ist das Material des Reibkörpers bei gleicher Raumform der Lamelle nach dem Baukastenprinzip aus mehreren Alternativen wählbar. Ein Aspekt der Erfindung ist somit ein auch vorstehend schon beschriebenes Baukastensystem. Aus diesem Baukasten können Lamellen mit unterschiedlichen Eigenschaften je nach Anwendungsfall ausgewählt werden. Die Besonderheit dieses Baukastensystems liegt nun darin, dass alle nach diesem Baukastensystem hergestellten Lamellen im endfertigen Zustand die gleiche Raumform aufweisen. Dies heißt, die Geometrie der Lamellen ist identisch. Insofern können die gleichen Werkzeuge für die Herstellung unterschiedlichster Lamellen verwendet werden. Es ist für den Hersteller der Lamellen dem Grunde nach völlig egal, welches Art von Lamelle als nächstes hergestellt werden soll. Insofern ist mit der Erfindung auch ein besonders flexibles System zur Herstellung von Lamellen mit unterschiedlichen Reibeigenschaften erreicht.

Weitere Vorteile und Merkmale der Erfindung ergeben sich aus der nachfolgenden Figurenbeschreibung. Es zeigen:
- Fig. 1: eine Ausführungsform einer erfindungsgemäßen Lamelle;
- Fig. 2: die Ausführungsform gemäß Figur 1 in teilgeschnittener Darstellung;
- Fig. 3: eine Ausführungsform eines erfindungsgemäßen Baukastensystems zur Herstellung verschiedener Lamellen;
- Fig. 4: eine Ausführungsform eines Reibkörpers für eine weitere Ausführungsform einer Lamelle;
- Fig. 5: eine mit dem Reibkörper gemäß Fig. 4 ausgestattete Ausführungsform einer Lamelle; und
- Fig. 6: eine zweite Variante eines erfindungsgemäßen Baukastensystems zur Herstellung von Lamellen mit unterschiedlichen Reibeigenschaften.

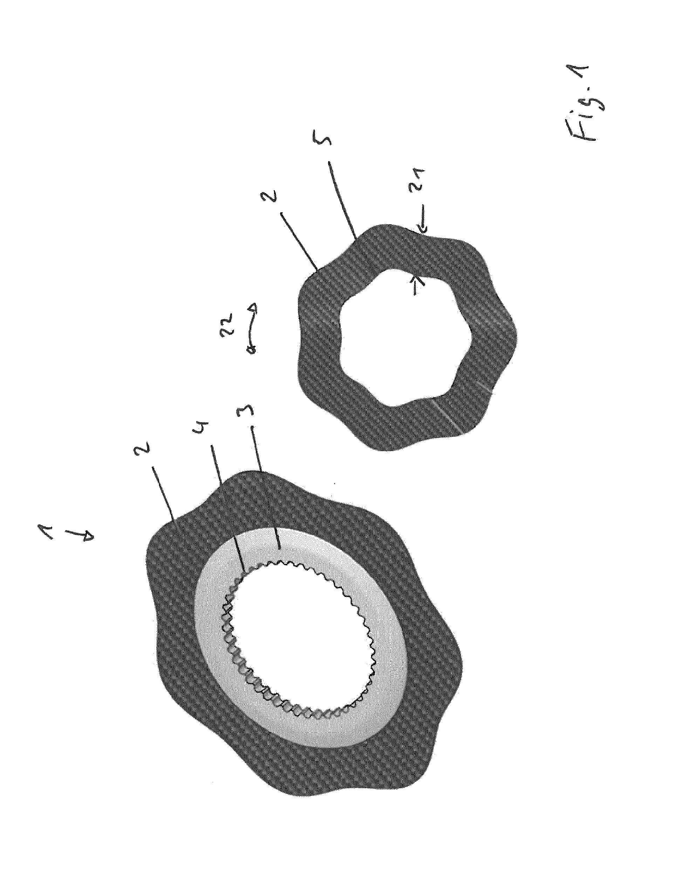

Fig. 1 zeigt eine Ausführungsform einer Lamelle 1. Diese weist einen Reibkörper 2 und einen Grundkörper 3 auf. Der Reibkörper 2 und der Grundkörper 3 sind miteinander verbunden. Sie bilden eine Einheit. Die Lamelle 1 kann als einstückig oder monolithisch bezeichnet werden. Dies wird dadurch erreicht, dass der Grundkörper 3 unmittelbar an den Reibkörper 2 angeformt wird. Der Grundkörper 3 kann beispielsweise durch Pressen, Sintern, Spritzgießen und/oder dergleichen endfertig und insbesondere ohne Fügestellen hergestellt werden.

Der Reibkörper 2 ist aus einem gewebten Fasermaterial gebildet. Hierzu wird ein Reibkörperrohling durch Spiralweben hergestellt. Der Reibkörperrohling bzw. der Reibkörper 2 wird somit nicht aus einer Fasermatte ausgestanzt, sondern bereits endkonturnah und insbesondere verschnittfrei geweben. Hierzu wird ein vergleichsweise schmales Band aus dem Fasermaterial mit einer Breite 21 insbesondere endlos hergestellt. Dieses Band weist eine Krümmung auf, so dass es schraubenförmig umlaufend aufeinander abgelegt werden kann. Das Ergebnis ist ein ringförmiger Reibkörperrohling. Dieser kann als Fasergelege bezeichnet werden. Das Spiralweben kann derart durchgeführt werden, dass sich eine zykloide Innenkontur 5 am Reibkörper 2 ergibt. Hierzu wird das den Reibkörperrohling bildende Fasermaterial-Band in eine Art Wellenform beziehungsweise Sinusform gewebt.

Der Reibkörperrohling kann anschließend ausgehärtet werden. Hierzu wird ein Kunstharz, gegebenenfalls zusammen mit einem beispielsweise keramischen Zusatzstoff, beigemengt. Das Aushärten erfolgt bei einer Temperatur zwischen 200°C und 350°C. Auf diese Weise erhält man einen sogenannten Grünling. Dieser wird nun noch bei einer Temperatur von ca. 1700°C bis 2000°C gebrannt. Hierbei silizieren die beigemengten Zusatzstoffe. Auf diese Weise kann der Reibkörper 2 endfertig hergestellt werden. Durch das Aushärten ist der Reibkörper 2 im Wesentlichen starr. Der so erhaltene ringförmige Reibkörper 2 ist in Fig. 1 dargestellt.

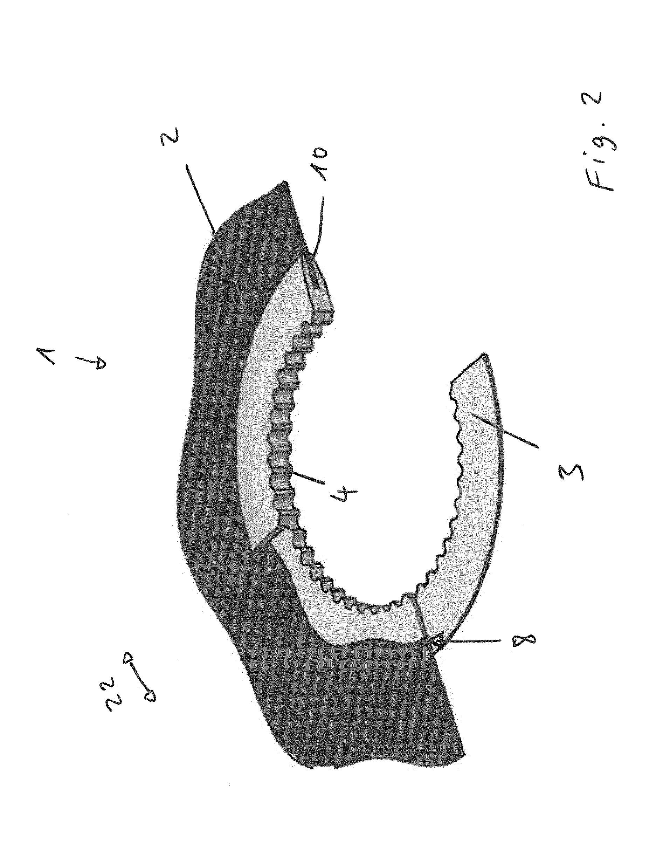

Der Grundkörper 3 wird anschließend, wie bereits geschildert, an den Reibkörper 2 angeformt. Wie in Figur 2 gezeigt, erhält der Grundkörper 3 hierdurch eine Außenkontur 8, welche im Wesentlichen der Innenkontur 5 des Reibkörpers 2 entspricht. Demnach kann die Außenkontur 8 des Grundkörpers 3 sowie die Innenkontur 5 des Reibkörpers 2 wellenförmig, insbesondere zykloid ausgebildet sein. Diese Innenkontur stellt eine besonders gut geeignete Möglichkeit zur formschlüssigen Verbindung zwischen dem Reibkörper 2 und dem Grundkörper 3 dar, und zwar mit Bezug auf die Umfangsrichtung 22.

Um mit einem abzubremsenden beziehungsweise anzutreibenden Teil verbunden werden zu können, weist der Grundkörper 3 eine Mitnahmeverzahnung 4 auf. Hierbei kann es sich um Mitnahmeprofil nach DIN 5480 handeln.

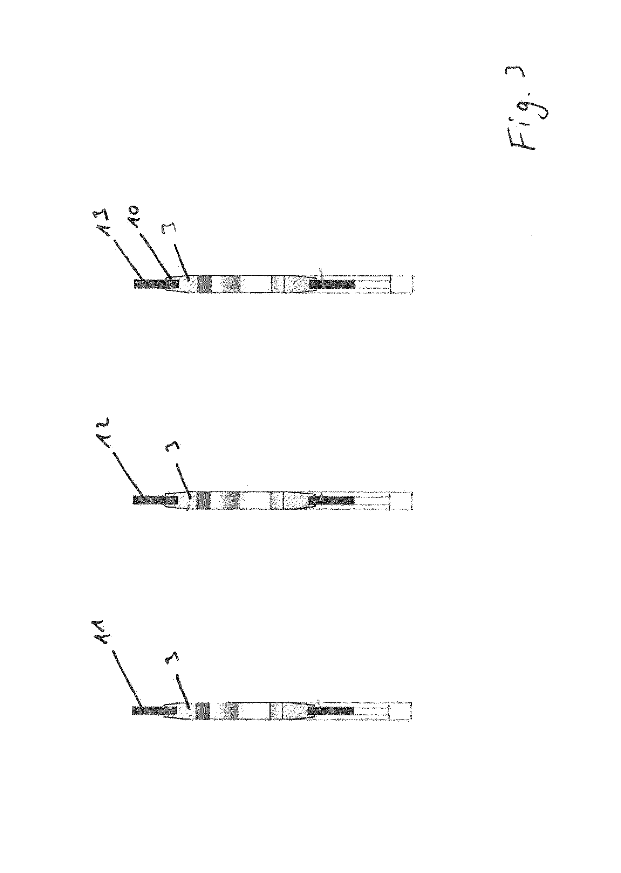

Fig. 3 zeigt eine Ausführungsform eines Baukastensystems im Sinne der vorliegenden Erfindung. Dargestellt sind drei hinsichtlich der Reibeigenschaften unterschiedliche Lamellen. Gemeinsam ist diesen drei Lamellen jedoch, dass sie alle die gleiche Raumform aufweisen. Zudem sind die Grundkörper 3 bei den drei Lamellen gleich ausgebildet. Sie können jedoch auch aus unterschiedlichen Materialien ausgebildet sein.

Kerngedanke des Baukastensystems gemäß Fig. 3 ist jedoch, dass die Reibkörper 11, 12, 13 aus unterschiedlichen Materialien ausgebildet sind. Der Reibkörper 11 ist aus einem faserverstärkten organischen Material ausgebildet. Der Reibkörper 12 ist aus einem faserverstärkten C/C-SiC-Material ausgebildet. Der Reibkörper 13 ist aus einem kohlefaserverstärkten Kunststoff gebildet. Obwohl also hinsichtlich ihrer Eigenschaften ganz unterschiedliche Reibkörper zum Einsatz kommen, können alle drei Lamellen mit identischen Werkzeugen hergestellt werden.

In den Figuren 2 und 3 ist noch zu erkennen, dass die Reibkörper in einer Nut 10 im Grundkörper 3 angeordnet sind. Diese Nut 10 ergibt sich bei der Herstellung des Grundkörpers. Der Grundkörper 3 schmiegt sich bei seiner Herstellung im den Reibkörper herum. Er nimmt den Reibkörper dadurch fest und unverlierbar zwischen sich auf. Der Reibkörper ist somit fest mit dem Grundkörper verbunden. Es ergibt sich eine dem Grunde nach einstückige, monolithische Lamelle.

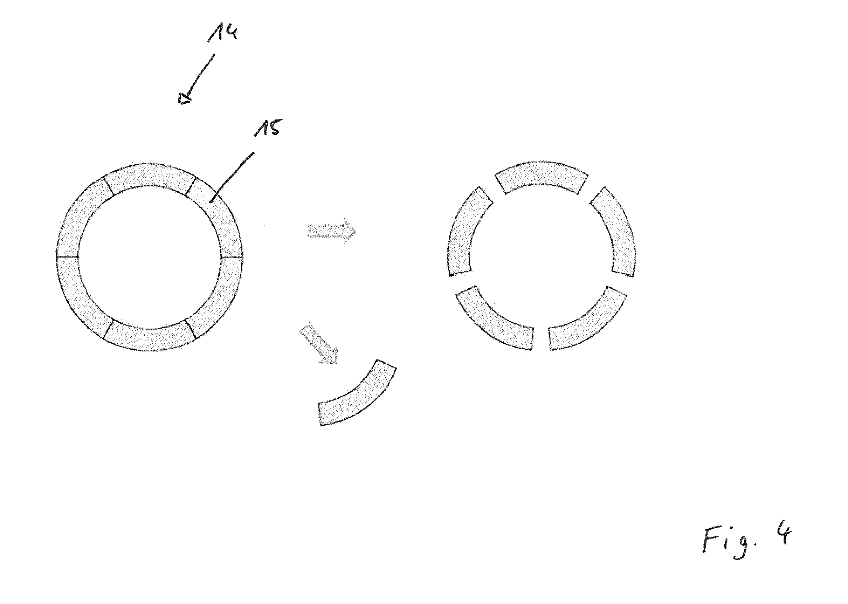

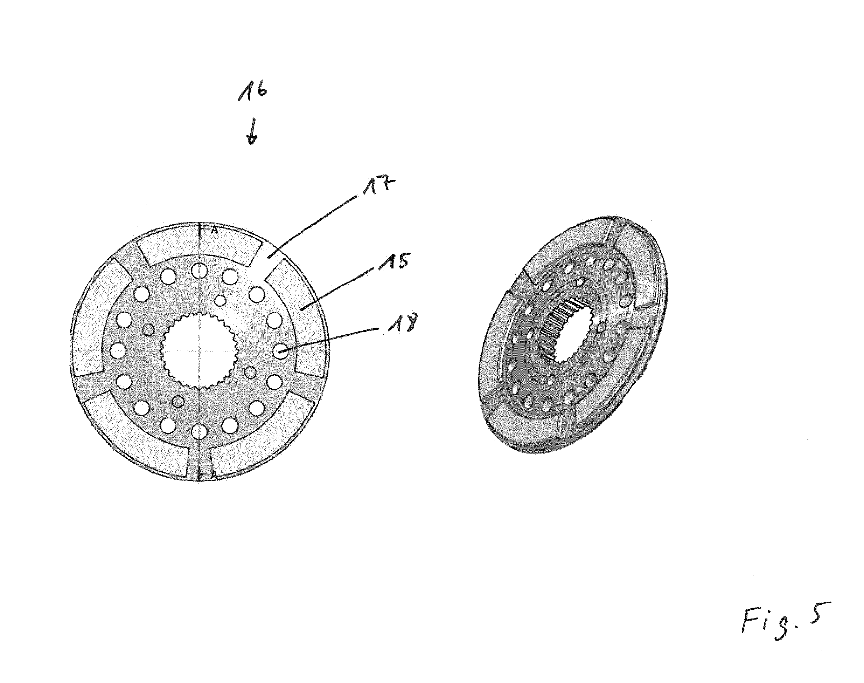

Fig. 4 zeigt eine Ausführungsform eines Reibkörpers 14 für eine Lamelle 16 (Fig. 5). Dieser Reibkörper 14 wird wie vorstehend bereits beschrieben endkonturnah und verschnittfrei durch Spiralweben eines ringförmigen Fasermaterials gebildet. Anschließend wird der Reibkörper 14 jedoch in Ringsegmente 15 unterteilt. Es können beispielsweise sechs Ringsegmente 15 gebildet werden durch sechs äquidistant über den Umfang des Reibkörpers 14 verteilte Schnitte. Dadurch ergeben sich sechs Ringsegmente 15. Fünf dieser Ringsegmente 15 werden zur Herstellung der Lamelle 16 benötigt. Das sechste Ringsegment ist jedoch kein Verschnitt oder Abfall, sondern kann für die Herstellung einer weiteren Reiblamelle weiterverwendet werden. Insofern ist auch dieses Verfahren vollkommen verschnittfrei. Wenn ein Reibkörper 14 in sechs Ringsegmente 15 unterteilt wird, können folglich aus jeweils fünf Reibkörpern 14 sechs Lamellen 16 mit Ringsegmenten 15 ausgerüstet werden.

Die Lamelle 16 verfügt über einen Grundkörper 17. Dieser erstreckt sich im Unterschied zu den Ausführungsformen nach den Fign. 1 bis 3 über die äußere Kante des Reibkörpers 14 beziehungsweise der Ringsegmente 15 in Umfangsrichtung hinaus. Der Grundkörper 17 stellt dadurch Flächen bereit, auf welche die Ringsegmente 15 aufgeklebt werden können. Die Ringsegmente 15 sind voneinander beabstandet um Spannungen im Material infolge unterschiedlicher Temperaturausdehnungen von Grundkörper 17 einerseits und Reibkörper 14 andererseits auszugleichen.

Im Unterschied zu den Lamellen 1 den Fign. 1 bis 3 sitzt der Reibkörper im endmontierten Zustand nicht radial auf dem Grundkörper, sondern vielmehr in axialer Richtung seitlich am Grundkörper.

Fig. 5 ist noch zu entnehmen, dass der Grundkörper 17 Durchlüftungslöcher 18 aufweist. Diese können für eine verbesserte Abfuhr von Reibungswärme sorgen.

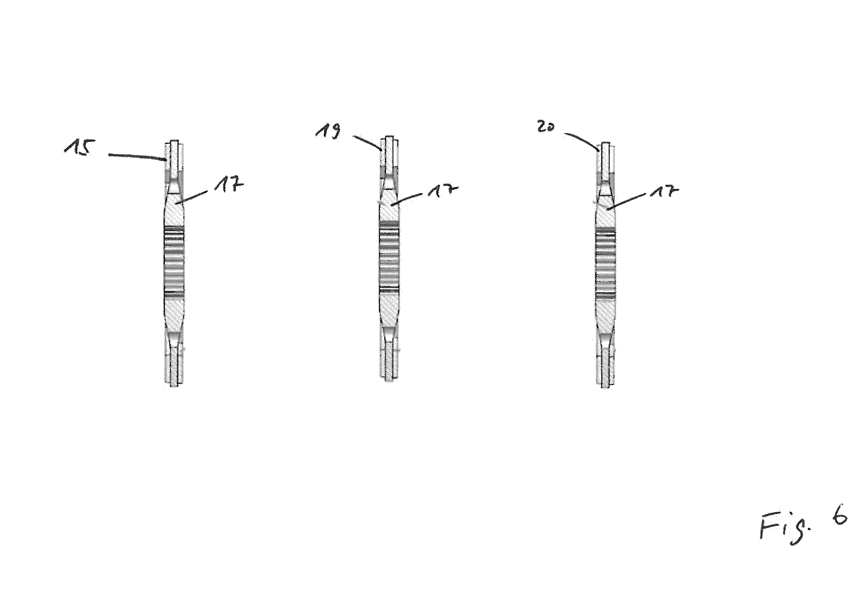

Fig. 6 zeigt eine weitere Ausführungsform eines Baukastensystems, diesmal unter Verwendung von zuvor beschriebenen Lamellen mit axial auf den Grundkörper aufgeklebten Ringsegmenten als Reibkörper. Es sind erneut drei verschiedene Lamellen vorgesehen. Das Ringsegment 15 ist aus einem faserverstärkten organischen Material gebildet. Das Ringsegment 19 ist aus einem faserverstärkten C/C-SiC-Material gebildet.

Das Ringsegment 20 ist aus einem kohlefaserverstärkten Kunststoff gebildet. Bemerkenswert ist, dass trotz der mit diesen unterschiedlichen Materialien der Ringsegmente verbundenen unterschiedlichen Reibeigenschaften alle drei unterschiedlichen Lamellen die gleiche Raumform aufweisen. Zudem können alle drei unterschiedlichen Lamellen mit den gleichen Werkzeugen hergestellt werden.

### Bezugszeichenliste

- 1: Lamelle
- 2: Reibkörper
- 3: Grundkörper
- 4: Mitnahmeverzahnung
- 5: Innenkontur
- 8: Außenkontur
- 10: Nut
- 11: Reibkörper
- 12: Reibkörper
- 13: Reibkörper
- 14: Reibkörper
- 15: Ringsegment
- 16: Lamelle
- 17: Grundkörper
- 18: Durchlüftungsloch
- 19: Ringsegment
- 20: Ringsegment
- 21: Breite
- 22: Umfangsrichtung

## Patentansprüche

1. Verfahren zur Herstellung einer Lamelle (1, 16) für eine Bremse bzw. Kupplung, wobei zunächst ein Reibkörper (2, 11, 12, 13, 14) aus einem Fasermaterial endkonturnah gebildet wird, und wobei der Reibkörper (2, 11, 12, 13, 14) anschließend mit einem als Mitnehmer dienenden Grundkörper (3, 17) verbunden wird.

2. Verfahren nach Anspruch 1, **dadurch gekennzeichnet, dass** der Grundkörper (3, 17) durch Pressen und/oder Spritzgießen an den Reibkörper (2, 11, 12, 13,) angeformt wird.

3. Verfahren nach Anspruch 2, **dadurch gekennzeichnet, dass** mit denselben Werkzeugen zum Pressen und/oder Spritzgießen Lamellen mit Reibkörpern (2, 11, 12, 13,) aus unterschiedlichen Fasermaterialien gebildet werden.

4. Verfahren nach einem der vorangehenden Ansprüche, **dadurch gekennzeichnet, dass** der Reibkörper (14) und der Grundkörper (17) durch Kleben miteinander verbunden werden.

5. Verfahren nach einem der vorangehenden Ansprüche, **dadurch gekennzeichnet, dass** der Reibkörper (14) als geschlossener Ring mit einem Radius R gebildet wird und anschließend in eine Anzahl von N Ringsegmenten (15) unterteilt wird, wobei entweder höchstens N-1 Ringsegmente (15) einzeln und voneinander beabstandet oder N Ringsegmente (15) auf einem Radius größer R mit dem Grundkörper (17) verbunden werden.

6. Verfahren nach einem der vorangehenden Ansprüche, **dadurch gekennzeichnet, dass** der Reibkörper (14) und der Grundkörper (17) getrennt voneinander hergestellt werden.

7. Lamelle für Bremsen bzw. Kupplungen, mit einem Grundkörper (3, 17) und einem mit dem Grundkörper (3, 17) verbundenen Reibkörper (2, 11, 12, 13, 14), wobei der Reibkörper (2, 11, 12, 13, 14) aus einem endkonturnah gefertigten Fasermaterial gebildet ist.

8. Lamelle nach Anspruch 7, **dadurch gekennzeichnet, dass** der Reibkörper (2, 11, 12, 13, 14) aus einem faserverstärkten organischen Material, einem faserverstärkten C/C-SiC-Material oder einem kohlefaserverstärkten Kunststoff gebildet ist.

9. Lamelle nach Anspruch 7 oder 8, **dadurch gekennzeichnet, dass** der Grundkörper (3, 17) aus faserverstärktem Duro- und/oder Thermoplast, oder Metall, insbesondere Alu-Druckguss gebildet ist.

10. Lamelle nach einem der Ansprüche 7 bis 9, **dadurch gekennzeichnet, dass** der Grundkörper (3,) derart an den Reibkörper (2, 11, 12, 13) angeformt ist, dass der Reibkörper in einer radial umlaufenden Nut (10) des Grundkörpers (3) aufgenommen ist.

11. Lamelle nach einem der Ansprüche 7 bis 9, **dadurch gekennzeichnet, dass** der Reibkörper (14) in Ringsegmente unterteilt ist, welches Ringsegmente auf den Grundkörper (17) aufgeklebt sind.

12. Lamelle nach einem der Ansprüche 7 bis 11, **dadurch gekennzeichnet, dass** der Grundkörper (3, 17) eine innere Mitnahmeverzahnung (4) aufweist.

13. Lamelle nach einem der Ansprüche 7 bis 12, **dadurch gekennzeichnet, dass** der Grundkörper (3, 17) Durchlüftungslöcher (18) aufweist.

14. Lamelle nach einem der Ansprüche 7 bis 13, **dadurch gekennzeichnet, dass** eine Lamelle eine Materialdichte von 1,5 bis 2,2 Gramm pro Kubikzentimeter aufweist.

15. Lamelle nach einem der Ansprüche 7 bis 14, **dadurch gekennzeichnet, dass** das Material des Reibkörpers (2, 11, 12, 13, 14) bei gleicher Raumform der Lamelle nach dem Baukastenprinzip aus mehreren Alternativen wählbar ist.
